# EUROPEAN PATENT SPECIFICATION

(11) **EP 1 972 535 B1**
(45) Date of publication and mention of the grant of the patent: **08.09.2010**
(21) Application number: 07010382.5
(22) Date of filing: 24.05.2007
(51) Int. Cl.: B62K 21/26

(54) **Handlebar grip**
Handgriff für Lenkstange
Poignée de guidon

(30) Priority: 21.03.2007 CN 200720141361 U
(43) Date of publication of application: 24.09.2008
(73) Proprietor: International Bicycle Products Corporation, Taichung Hsien (TW)
(72) Inventor: Wu, Kuo-Lin, Tachia Taichung Hsien (TW)
(74) Representative: Becker Kurig Straus

(56) References cited:
- CN-Y- 2 542 546
- DE-U1- 20 207 483
- US-A1- 2004 068 844

## Description

### BACKGROUND OF THE INVENTION

### 1. Field of the Invention

The present invention relates generally to a handlebar grip and more specifically, to a handlebar grip for a transportation vehicle, for example, a bicycle, motorcycle or tricycle.

### 2. Description of the Related Art

Taiwan Patent No. M267157 discloses a handlebar grip for a transportation vehicle including a grip body, a locating ring, a screw and a tightening member. The grip body is provided at one end thereof with an insertion groove for insertion of the locating ring and a through hole in communication with the insertion groove. The locating ring is provided with a center hole surrounded by an inner surface thereof and a threaded hole passed through the inner and outer surfaces thereof. The screw is inserted into the through hole of the grip body and threaded into the threaded hole of the locating ring. The tightening member is mounted in the inner surface of the locating ring. When the screw is screwed up, a bottom end of the screw leans against the outer surface of the tightening member such that the inner surface of the tightening member is compressed against the periphery of the handlebar of the transportation vehicle, thereby firmly fixing the handlebar grip to the handlebar of the transportation vehicle.

According to this design, both of the tightening member and the handlebar of the transportation vehicle are made of metals. When the handlebar grip and the handlebar are assembled, the constant friction between the tightening member and the handlebar will cause the inner surface of the tightening member and the periphery of the handlebar to damage, resulting in that the handlebar grip may not be securely fixed to the handlebar of the transportation vehicle. Therefore, it is a need to provide an improved handlebar grip.

### SUMMARY OF THE INVENTION

The present invention has been accomplished in view of the above-noted circumstances. It is therefore one objective of the present invention to provide a handlebar grip for a transportation vehicle, which doesn't cause damage to the periphery of a handlebar of the transportation vehicle.

It is therefore another objective of the present invention to provide a handlebar grip for a transportation vehicle, which is securely fastened to a handlebar of the transportation vehicle.

To achieve these objectives of the present invention, the handlebar grip comprises a grip body, a tightening member, a locating ring and a fastener. The grip body has a body portion and an annular flange provided on one end of the body portion. The tightening member is mounted on an outer surface of the annular flange of the grip body. The locating ring is mounted on the outer surface of the annular flange of the grip body in such a way that the tightening member is placed in between the locating ring and the annular flange of the grip body. The fastener is inserted into a through hole of the locating ring in such a way that one end of the fastener leans against an outer surface of the tightening member to press the annular flange of the grip body to be radially inwardly deformed and compressed against the periphery of a handlebar of a transportation vehicle that is inserted into the grip body. Therefore, the handlebar grip is firmly fixed to the handlebar of the transportation vehicle.

Further scope of applicability of the present invention will become apparent from the detailed description given hereinafter. However, it should be understood that the detailed description and specific examples, while indicating preferred embodiments of the invention, are given by way of illustration only.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG 1 is an exploded view of a first embodiment of the present invention;
FIG. 2 is a perspective view of a grip body of the first embodiment of the present invention;
FIG. 3 is an end view of the first embodiment of the present invention;
FIG. 4 is similar to FIG. 3 but showing the annular flange compressed;
FIG 5 is an exploded view of a second embodiment of the present invention;
FIG. 6 is a perspective view of a grip body of the second embodiment of the present invention;
FIG. 7 is an end view of the second embodiment of the present invention;
FIG 8 is similar to FIG. 7 but showing the annular flange compressed;
FIG. 9 is an exploded view of a third embodiment of the present invention;
FIG. 10 is a perspective view of a grip body of the third embodiment of the present invention;
FIG 11 is an end view of the third embodiment of the present invention, and
FIG. 12 is similar to FIG. 11 but showing the annular flange compressed.

### DETAILED DESCRIPTION OF THE INVENTION

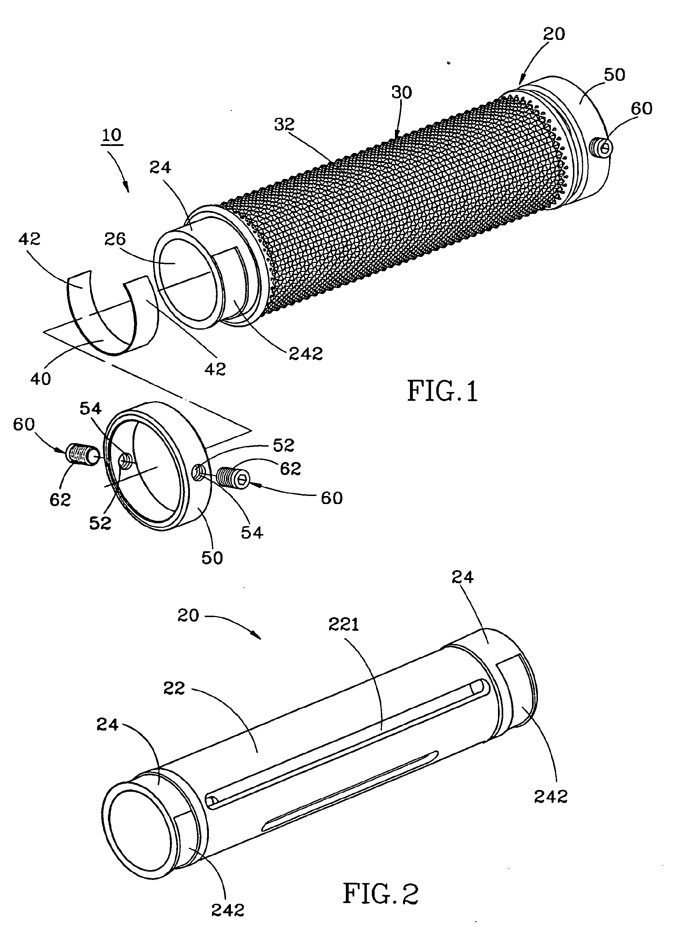

As shown in FIG. 1, a handlebar grip **10** for a transportation vehicle in accordance with a first embodiment of the present invention comprises a grip body **20,** an outer layer **30,** two tightening members **40,** two locating rings **50** and four fasteners **60.**

Referring to FIG. 2, the grip body **20** is injection-molded from plastics, comprising a body portion **22** having a plurality of elongated slots **221** equiangularly spaced around a periphery thereof and extending along the longitudinal axis thereof from the front end to the rear end thereof, two annular flanges **24** respectively provided on the front and rear ends of the body portion **22** and provided at an outer surface thereof with a C-shaped receiving portion **242,** and a center through hole **26** for insertion of a handlebar of the transportation vehicle.

The outer layer **30** is made of rubber and covered on the outer surface of the body portion **22** of the grip body **20.** Because of the presence of the elongated slots **221,** the outer layer **30** will be gripped flexibly when it is gripped by the hand of a rider. Further, recessed lines **32** are formed on the surface of the outer layer **30** to cause a sense of beauty and increase the friction force upon gripping by the hand of the rider.

The tightening members **40** are made of metals and C-shaped. Each tightening member **40** is accommodated at the receiving portion **242** of the annular flange **24** of the grip body **20.**

The locating rings **50** are sleeved onto the outer surface of the annular flanges **24** of the grip body **20** in such a way that the tightening member **40** is placed in between the locating ring **50** and the annular flange **24** of the grip body **20.** The locating rings **50** each have two through holes **52,** each of which is passed through the inner and outer surfaces of the respective locating ring **50** and has inner threads **54** disposed in the inside wall thereof. Each of the through holes **50** is aimed at an end portion **42** of the tightening member **40.**

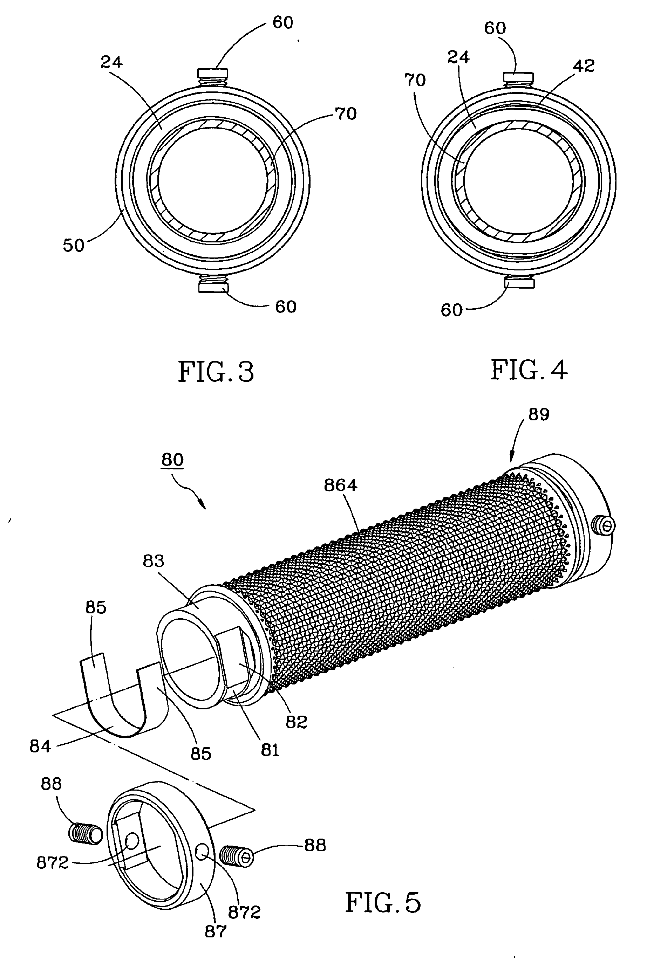

The fasteners **60** each have outer threads **62** engaging the inner threads **54** of the through holes **52** of the locating rings **50** in such a way that a bottom end of the fastener **60** can be protruded out of the through holes **52** of the locating rings **50** to lean against an outer surface of the end portion **42** of the tightening member **40,** as shown in FIG. 4.

During installation of the handlebar grip **10** in the handlebar **70** of the transportation vehicle (bicycle or motorcycle), the fasteners **60** are loosened such that the bottom ends of the fasteners **60** don't lean against the outer surfaces of the end portions **42** of the tightening members **40.** Thus, the handlebar grip **10** can easily be sleeved onto the handlebar **70** of the transportation vehicle through the center through hole **26** until the outer end of the locating ring **50** is flush with the outer end of the handlebar **70,** and then the fasteners **60** are fastened tight by a hand tool. At this time, as shown in FIG 4, the bottom ends of the fasteners **60** are protruded out of the through holes **52** of the locating rings **50** and leans against the outer surfaces of the end portions **42** of the tightening members **40** such that the annular flanges **40** of the grip body **20** are pressed by the tightening members **40** to be radially inwardly deformed and compressed against the periphery of the handlebar **70** of the transportation vehicle, thereby firmly fixing the handlebar grip **10** to the handlebar **70** of the transportation vehicle.

As indicated above, the present invention provides a handlebar grip that can be securely fixed to the handlebar of the transportation vehicle. Furthermore, because the grip body is made of plastics, the annular flange of the grip body won't cause damage to the periphery of the handlebar of the transportation vehicle when they are assembled.

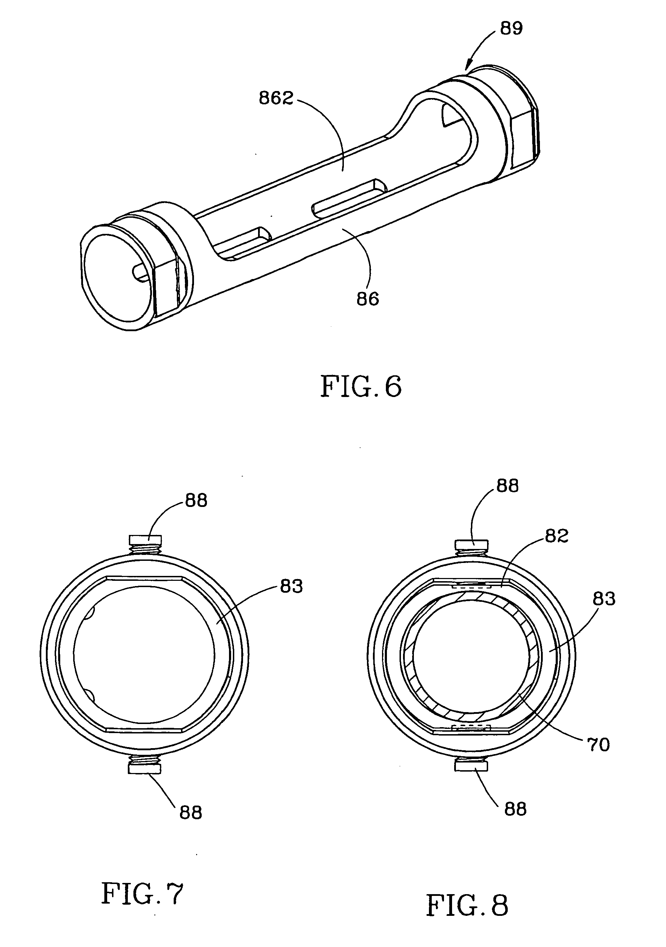

Referring to FIG. 5, a handlebar grip **80** constructed in accordance with a second embodiment of the present invention is similar to the handlebar grip **10** of the first embodiment of the present invention with the exception that the tightening member **84** has two first flat ends **85** respectively corresponding to the through holes **872** of the locating ring **87** and the receiving portion **81** of the annular flange **83** of the grip body **89** has two second flat ends **82** to receive the first flat ends **85** of the tightening member **84** such that the thickness of the second flat ends **82** of the annular flange **83** of the grip body **89** are smaller than that of other parts of the annular flange **83** of the grip body **89.** Further, as shown in FIG. 6, the body portion **86** of the grip body **89** has a hollow portion **862** to be covered with the outer layer **864** for gripping flexibly by the hand of the rider.

When the fasteners **88** are fastened up, as shown in FIG. 7 and FIG. 8, the first flat ends **85** of the tightening member **84** are pressed by the fasteners **88** to lean against the second flat ends **82** of the receiving portion **81** of the annular flange 83, thereby fixing the handlebar grip **80** to the handlebar.

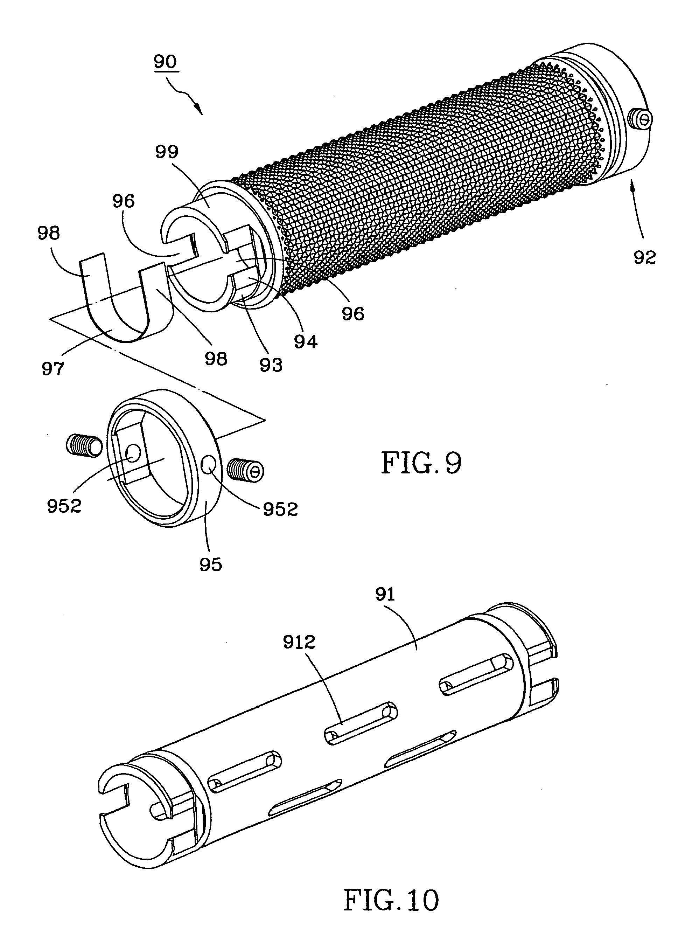

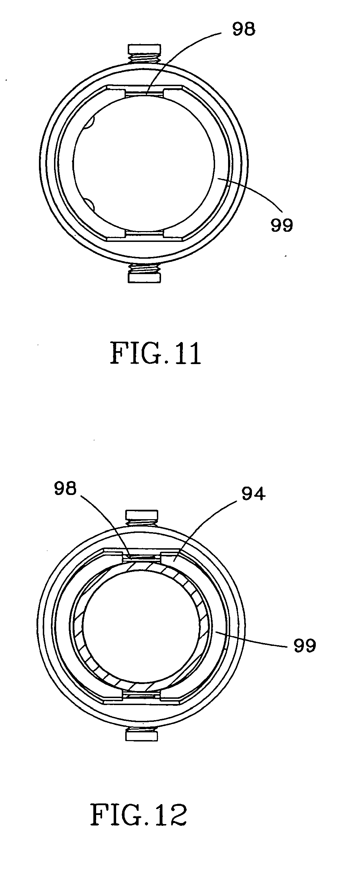

Referring to FIG. 9, a handlebar grip **90** constructed in accordance with a third embodiment of the present invention is similar to the two above-mentioned embodiments of the present invention, except that the length of the elongated slots **912** of the body portion **91** of the grip body **92** are shorter than that of the elongated slots **212** of the first embodiment of the present invention, as shown in FIG. 10. Besides, the annular flanges **99** of the grip body **92** are provided with two crevices **96** at the two second flat ends **94** of the receiving portion **93** thereof. The crevices **96** are respectively aimed at the through holes **952** of the locating ring **95** and covered with the first flat ends **98** of the tightening member **97.** Consequently, as shown FIG. 11 and FIG 12, when the first flat ends **98** of the tightening member **97** lean against the second flat ends **94** of the receiving portion **93** of the annular flange **99** of the grip body **92,** the annular flanges **99** will be deformed more because of the crevices **96,** thereby achieving the objective of the present invention.

The invention being thus described, it will be obvious that the same may be varied in many ways within the scope of the following claims.

## Claims

1. A handlebar grip (10, 80, 90) comprising:
a grip body (20, 89, 92) having a body portion (22, 86, 91) and an annular flange (24, 83, 99) provided on one end of the body portion (22, 86, 91);
a tightening member (40, 84, 97) mounted on an outer surface of the annular flange (24, 83, 99) of the grip body (20, 89, 92);
a locating ring (50, 87, 95) mounted on the outer surface of the annular flange (24, 83, 99) of the grip body (20, 89, 92) in such a way that the tightening member (40, 84, 97) is placed in between the locating ring (50, 87, 95) and the annular flange (24, 83, 99) of the grip body (20, 89, 92), the locating ring (50, 87, 95) having a through hole (52, 872, 952) through outer and inner surfaces thereof; and
a fastener (60, 88) inserted into the through hole (52, 872, 952) of the locating ring (50, 87, 95) in such a way that one end of the fastener (60, 88) leans against the outer surface of the tightening member (40, 84, 97) to press the annular flange (24, 83, 99) of the grip body (20, 89, 92) to be radially and inwardly deformed.

2. The handlebar grip (10, 80, 90) as claimed in claim 1, wherein the annular flange (24, 83, 99) of the grip body (20, 89, 92) includes a receiving portion (242, 81, 93) provided on the outer surface thereof for receiving the tightening member (40, 84, 97).

3. The handlebar grip (10, 80, 90) as claimed in claim 1, wherein the tightening member (40, 84, 97) is C-shaped.

4. The handlebar grip (80, 90) as claimed in claim 3, wherein tightening member (84, 97) has a first flat end (85, 98) corresponding to the through hole (872, 952) of the locating ring (87, 95).

5. The handlebar grip (80, 90) as claimed in claim 4, wherein the receiving portion (81, 93) of the annular flange (83, 99) of the grip body (89, 92) has a second flat end (82, 94) to receive the first flat end (85, 98) of the tightening member (84, 97).

6. The handlebar grip (80, 90) as claimed in claim 5, wherein the thickness of the second flat end (82, 94) of the receiving portion (81, 93) of the annular flange (83, 99) of the grip body (89, 92) is smaller than that of other parts of the annular flange (83, 99) of the grip body (89, 92).

7. The handlebar grip (90) as claimed in claim 2, wherein the receiving portion (93) of the annular flange (99) of the grip body (92) has a crevice (96) corresponding to the through hole (952) of the locating ring (95).

8. The handlebar grip (10, 90) as claimed in claim 1, wherein the body portion (22, 91) of the grip body (20, 92) has a plurality of elongated slots (221, 912).

9. The handlebar grip (80) as claimed in claim 1, wherein the body portion (86) of the grip body (89) has a hollow portion (862).

10. The handlebar grip (10, 80) as claimed in claim 1, wherein the handlebar grip (10, 80) further comprises an outer layer (30, 864) covering on an outer surface of the body portion (22, 86) of the grip body (20, 89).

## Patentansprüche

1. Lenkergriff (10, 80, 90), umfassend,
einen Griffkörper (20, 89, 92), der einen Körperbereich (22, 86, 91) und einen ringförmigen Flansch (24, 83, 99) aufweist, der an einem Ende des Körperbereichs (22, 86, 91) bereitgestellt ist,
ein Element zum Festziehen (40, 84, 97), das an einer äußeren Oberfläche des ringförmigen Flansches (24, 83, 99) des Griffkörpers (20, 89, 92) angebracht vorliegt,
einen Lokalisierungsring (50, 87, 95), der an der äußeren Oberfläche des ringförmigen Flansches (24, 83, 99) des Griffkörpers (20, 89, 92) derart angebracht vorliegt, dass das Element zum Festziehen (40, 84, 97) zwischen dem Lokalisierungsring (50, 87, 95) und dem ringförmigen Flansch (24, 83, 99) des Griffkörpers (20, 89, 92) angeordnet ist, worin der Lokalisierungsring (50, 87, 95) ein Durchgangsloch (52, 872, 952) durch äußere und innere Oberflächen davon aufweist, und
ein Befestigungsmittel (60, 88), das in das Durchgangsloch (52, 872, 952) des Lokalisierungsrings (50, 87, 95) derart eingefügt vorliegt, dass ein Ende des Befestigungsmittels (60, 88) an der äußeren Oberfläche des Elements zum Festziehen (40, 84, 97) anliegt, um den ringförmigen Flansch (24, 83, 99) des Griffkörpers (20, 89, 92) so zu drücken, dass er sich radial und einwärts verformt.

2. Lenkergriff (10, 80, 90) nach Anspruch 1, worin der ringförmige Flansch (24, 83, 99) des Griffkörpers (20, 89, 92) einen Aufnahmebereich (242, 81, 93) umfasst, der an der äußeren Oberfläche davon zum Aufnehmen des Elements zum Festziehen (40, 84, 97) bereitgestellt ist.

3. Lenkergriff (10, 80, 90) nach Anspruch 1, worin das Element zum Festziehen (40, 84, 97) C-förmig ist.

4. Lenkergriff (80, 90) nach Anspruch 3, worin das Element zum Festziehen (84, 97) ein erstes flaches Ende (85, 98) aufweist, das mit dem Durchgangsloch (872, 952) des Lokalisierungsrings (87, 95) übereinstimmt.

5. Lenkergriff (80, 90) nach Anspruch 4, worin der Aufnahmebereich (81, 93) des ringförmigen Flansches (83, 99) des Griffkörpers (89, 92) ein zweites flaches Ende (82, 94) aufweist, um das erste flache Ende (85, 98) des Elements zum Festziehen (84, 97) aufzunehmen.

6. Lenkergriff (80, 90) nach Anspruch 5, worin die Dicke des zweiten flachen Endes (82, 94) des Aufnahmebereiches (81, 93) des ringförmigen Flansches (83, 99) des Griffkörpers (89, 92) kleiner ist als die von anderen Teilen des ringförmigen Flansches (83, 99) des Griffkörpers (89, 92).

7. Lenkergriff (90) nach Anspruch 2, worin der Aufnahmebereich (93) des ringförmigen Flansches (99) des Griffkörpers (92) eine Spalte (96) aufweist, die mit dem Durchgangsloch (952) des Lokalisierungsrings (95) übereinstimmt.

8. Lenkergriff (10, 90) nach Anspruch 1, worin der Körperbereich (22, 91) des Griffkörpers (20, 92) mehrere verlängerte Schlitze (221, 912) aufweist.

9. Lenkergriff (80) nach Anspruch 1, worin der Körperbereich (86) des Griffkörpers (89) einen hohlen Bereich (862) aufweist.

10. Lenkergriff (10, 80) nach Anspruch 1, worin der Lenkergriff (10, 80) weiterhin eine Außenschicht (30, 864) umfasst, die eine äußere Oberfläche des Körperbereichs (22, 86) des Griffkörpers (20, 89) bedeckt.

## Revendications

1. Une poignée de guidon (10, 80, 90) comprenant :
un corps de poignée (20, 89, 92) comportant une partie de corps (22, 86, 91) et une bride annulaire (24, 83, 99) pourvue à une extrémité de la partie de corps (22, 86, 91) ;
un membre de serrage (40, 84, 97) monté sur une surface externe de la bride annulaire (24, 83, 99) du corps de poignée (20, 89, 92) ;
un anneau de localisation (50, 87, 95) monté sur la surface externe de la bride annulaire (24, 83, 99) du corps de poignée (20, 89, 92) d'une façon telle que le membre de serrage (40, 84, 97) est placé entre l'anneau de localisation (50, 87, 95) et
la bride annulaire (24, 83, 99) du corps de poignée (20, 89, 92), l'anneau de localisation (50, 87, 95) comportant un trou (52, 872, 952) passant au travers des surfaces externe et interne de celui-ci ; et
une attache (60, 88) insérée dans le trou (52, 872, 952) de l'anneau de localisation (50, 87, 95) d'une façon telle qu'une extrémité de l'attache (60, 88) s'appuie contre la surface externe du membre de serrage (40, 84, 97) pour comprimer la bride (24, 83, 99) du corps de poignée (20, 89, 92) pour être déformée radialement et intérieurement.

2. La poignée de guidon (10, 80, 90) telle que revendiquée dans la revendication 1 dans laquelle la bride (24, 83, 99) du corps de poignée (20, 89, 92) inclut une partie réceptrice (242, 81, 93) pourvue à la surface externe de celle-ci pour recevoir le membre de serrage (40, 84, 97).

3. La poignée de guidon (10, 80, 90) telle que revendiquée dans la revendication 1 dans laquelle le membre de serrage (40, 84, 97) est en forme de C.

4. La poignée de guidon (80, 90) telle que revendiquée dans la revendication 1 dans laquelle le membre de serrage (84, 97) comporte une première extrémité plate (85, 98) correspondant au trou (872, 952) de l'anneau de localisation (82, 95).

5. La poignée de guidon (80, 90) telle que revendiquée dans la revendication 4 dans laquelle la portion réceptrice (81, 93) de la bride annulaire (83, 99) du corps de poignée (89, 92) comporte une seconde extrémité plate (82, 94) pour recevoir la première extrémité plate (85, 98) du membre de serrage (84, 97).

6. La poignée de guidon (80, 90) telle que revendiquée dans la revendication 5 dans laquelle l'épaisseur de la seconde extrémité plate (82, 94) de la portion réceptrice (81, 93) de la bride annulaire (83, 99) du corps de poignée (89, 92) est plus petite que les autres parties de la bride annulaire (83, 99) du corps de poignée (89, 92).

7. La poignée de guidon (80, 90) telle que revendiquée dans la revendication 2 dans laquelle la portion réceptrice (93) de la bride annulaire (99) du corps de poignée ( 92) comporte une crevasse (96) correspondant au trou (952) de l'anneau de localisation (95).

8. La poignée de guidon (10, 90) telle que revendiquée dans la revendication 1 dans laquelle la partie de corps (22, 91) du corps de poignée (20, 92) comporte une pluralité de fentes allongées (221, 912).

9. La poignée de guidon (80) telle que revendiquée dans la revendication 1 dans laquelle la partie de corps (86) du corps de poignée (89) comporte une partie creuse (862).

10. La poignée de guidon (10, 80) telle que revendiquée dans la revendication 1 dans laquelle la poignée de guidon (10, 80) comprend en outre une couche externe (30, 864) recouvrant une surface externe de la partie de corps (22, 86) du corps de poignée (20, 89).
